# FASCICULE DE BREVET EUROPEEN

(11) **EP 4 330 581 B1**
(45) Date de publication et mention de la délivrance du brevet: **29.01.2025**
(21) Numéro de dépôt: 22719978.3
(22) Date de dépôt: 06.04.2022
(51) Int. Cl.: F16K 3/34, F16K 3/26, F16K 31/54, F16K 3/316

(54) **VANNE DE REGULATION CRYOGENIQUE AMELIOREE POUR ENGIN AERONAUTIQUE OU ASTRONAUTIQUE**
KRYOGENES REGELVENTIL FÜR EIN LUFT- ODER RAUMFAHRZEUG
IMPROVED CRYOGENIC REGULATING VALVE FOR AIRCRAFT OR SPACECRAFT

(30) Priorité: 28.04.2021 FR 2104452
(43) Date de publication de la demande: 06.03.2024
(73) Titulaire: ArianeGroup SAS, 78130 Les Mureaux (FR)
(72) Inventeur: RIOS FERNANDEZ, Sonia, 27207 Vernon Cedex (FR); LAVENU, Yoann, 27207 Vernon Cedex (FR)
(74) Mandataire: Cabinet Beau de Loménie
(86) Numéro de dépôt international: PCT/FR2022/050641
(87) Numéro de publication internationale: WO 2022/229535

(56) Documents cités:
- EP-A1- 3 309 436
- EP-B1- 0 846 237
- US-A1- 2014 054 477

## Description

### Domaine Technique

Le présent exposé concerne le domaine des engins aéronautiques et astronautiques, et notamment des moteurs équipant ce type d'engins, par exemple des moteurs de fusée. Le présent exposé concerne en particulier une vanne de régulation cryogénique à système de transmission pignon/crémaillère pour un engin aéronautique ou astronautique, un moteur d'engin aéronautique ou astronautique comprenant une telle vanne, et un procédé de réglage utilisant une telle vanne.

### Technique antérieure

Dans le cadre des études des vannes de régulation cryogénique pour moteurs d'engin aéronautique ou astronautique, par exemple pour moteurs de fusée, les besoins en résolution, c'est-à-dire en précision, sont des critères importants dans la conception de ces équipements. Ils permettent en effet de réguler les points de fonctionnement du moteur (poussé et rapport de mélange), et de minimiser les couples d'actionnement. Ce besoin de régulation précise des points de fonctionnement existe pour les moteurs de fusée, mais également pour d'autres types de systèmes propulsifs à fluide cryogénique, par exemple pour avion ou pour satellite.

Par conséquent, des solutions adaptées sont nécessaires pour limiter au mieux l'impact des jeux fonctionnels dans les mécanismes concernées, pouvant nuire à la précision des vannes, notamment dans le système de transmission pignon-crémaillère de ces vannes de régulation. Ces mécanismes doivent être optimisés pour ne pas générer de forts couples d'actionnement.

Le domaine d'application de ces vannes, en termes de températures, peut être très large, pouvant démarrer à 20K ou moins selon la nature du fluide cryogénique, et atteindre de hautes températures. US 2014/054477 A1 et EP 0 846 237 A1 divulguent des exemples de vannes de régulation.

Ces fortes variations de température, pouvant atteindre des différentiels de plusieurs centaines de kelvin, génèrent des contractions/dilatations différentielles dans les différents matériaux constituant le mécanisme, et augmentent ainsi les risques d'évolution des jeux dans ce dernier.

Il est donc nécessaire de veiller à réduire au maximum le jeu initial en réglant ce dernier lors du montage, et veiller à ce que les contractions ou dilatations des différents matériaux ne viennent pas perturber le fonctionnement de la vanne, par exemple si ces contractions ou dilatations amènent un serrage du système de transmission, bloquant les mouvements de celui-ci, ou au contraire des jeux trop importants, impactant directement la précision de la vanne.

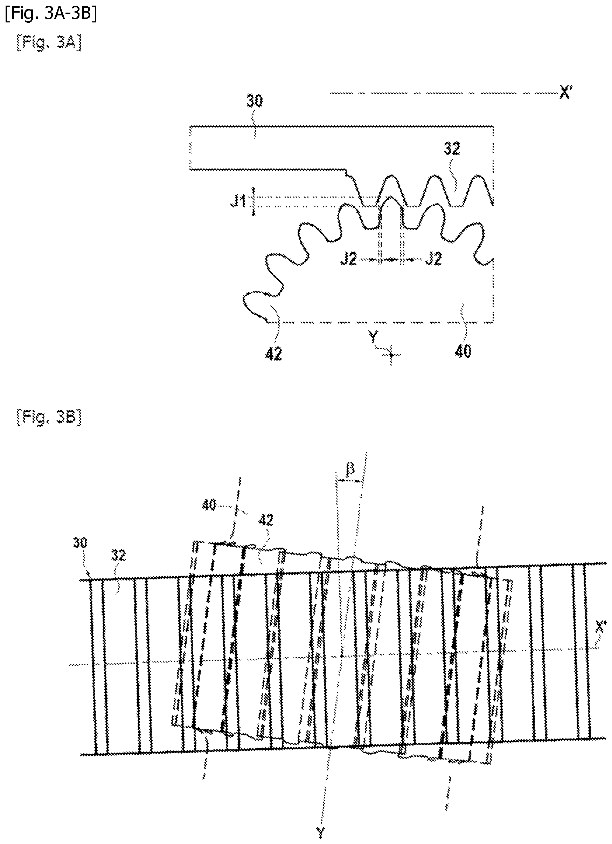

Le mécanisme de la vanne de régulation avec système de transmission pignon/crémaillère comprend un élément de laminage comportant la crémaillère, et étant actionné par un arbre de transmission comportant un pignon. L'arbre de transmission est guidé en rotation par des fonctions pivots (par exemple paliers ou roulements) et l'élément de laminage est guidé en translation par des fonctions glissières (par exemple des paliers). Ces différentes fonctions comportent des jeux de fonctionnement ajustés strictement supérieurs à zéro au minimum, et dont les maximums sont dépendants de la précision de réalisation des différentes pièces concernées ainsi que des températures d'utilisation (contraction/dilatation des pièces). Cela implique une certaine dispersion sur le positionnement et la perpendicularité des axes entre l'arbre et l'élément de laminage qui doit être pris en compte au niveau de la liaison pignon/crémaillère associée. Un jeu fonctionnel au niveau de cette liaison doit donc être identifié. La variation de ce jeu est directement impactée par les dispersions dimensionnelles et de positions des différentes fonctions pivots/glissières et pièces précédentes associées, en respectant impérativement un jeu strictement supérieur à zéro pour éviter toute hyperstaticité, tout en permettant d'assurer un contact linéique sur les dents de la liaison engrenage en fonctionnement favorable au pression de hertz par exemple, et ce quel que soit la température d'utilisation. Cela peut amener à des jeux maximaux pignon/crémaillère assez importants (représentés par J1 et J2 sur la figure 3A) en fonction de la configuration dimensionnelle des pièces, et impacter la précision de réglage de manoeuvre de la vanne (résolution de la vanne sur les sections d'écoulement).

Il existe donc un besoin pour s'affranchir au moins en partie des inconvénients mentionnés ci-dessus.

### Exposé de l'invention

Le présent exposé concerne une vanne de régulation à système de transmission pignon/crémaillère pour engin aéronautique ou astronautique, comprenant :
- un corps de vanne,
- un arbre de transmission disposé au moins en partie dans le corps de vanne, mobile en rotation autour d'un premier axe, et comportant un pignon,
- un élément de laminage disposé au moins en partie dans le corps de vanne, mobile en translation le long d'un deuxième axe sensiblement perpendiculaire au premier axe, et comportant une crémaillère, la crémaillère étant engagée avec le pignon de sorte qu'une rotation de l'arbre de transmission entraine une translation de l'élément de laminage, une première extrémité de l'élément de laminage étant guidée en translation par un premier palier fixe, et une deuxième extrémité de l'élément de laminage étant guidée en translation par un deuxième palier,
- une bride de liaison annulaire fixée au corps de vanne par l'intermédiaire de moyens de fixation, la bride de liaison annulaire s'étendant radialement entre une face interne axisymétrique autour du deuxième axe et une face externe axisymétrique autour d'un axe central, la face interne comprenant un logement radialement interne dans lequel est logé le deuxième palier, le deuxième axe étant décalé radialement par rapport à l'axe central.

Dans le présent exposé, les termes « radialement », « interne », « externe » et leurs dérivés se rapportent à la direction radiale, c'est-à-dire la direction perpendiculaire à l'axe central de la bride de liaison annulaire.

Le logement radialement interne peut être une gorge circonférentielle réalisée sur la face interne de la bride de liaison annulaire. Le deuxième palier peut être un manchon logé dans ce logement, entourant la deuxième extrémité de l'élément de laminage en étant en contact avec celle-ci.

Selon une vue de face, c'est-à-dire une vue parallèle à l'axe central de la face externe de la bride, la face externe de la bride de liaison annulaire définit un cercle externe, l'axe central de la face externe passant par le centre de ce cercle externe. De même, la face interne de la bride, comprenant le logement, définit un cercle interne. L'axe du logement, c'est-à-dire le deuxième axe, passe par le centre de ce cercle interne, les cercles interne et externe n'étant pas concentriques.

Compte tenu du fait que l'axe du logement radialement interne, c'est-à-dire le deuxième axe, est décalé radialement par rapport à l'axe central de la face externe de la bride, encore appelé axe principal de la bride, une rotation de cette dernière autour de son axe principal entraine donc un déplacement de l'axe du logement radialement interne selon un cercle, le rayon de ce cercle étant égal à la valeur du décalage entre ses deux axes.

Par conséquent, alors que le premier palier est maintenu dans une position fixe, une rotation de la bride de liaison annulaire autour de son axe central (ou principal) entraîne un déplacement vertical du deuxième palier. Ce déplacement vertical du deuxième palier permet d'entrainer la deuxième extrémité de l'élément de laminage vers le haut ou vers le bas, selon le sens de rotation de la bride, permettant ainsi de rapprocher ou d'éloigner la crémaillère du pignon de l'arbre de transmission.

En d'autres termes, la bride de liaison annulaire est une bride de réglage, permettant de régler la hauteur de la deuxième extrémité de l'élément de laminage. En particulier, il est possible, en faisant tourner la bride de liaison annulaire autour de son axe central, ou principal, d'amener la crémaillère au contact avec le pignon. Plus précisément, il est possible d'amener les dents de la crémaillère à venir au contact du fond des rainures existant entre deux dents du pignon.

Cette position de contact entre la crémaillère et le pignon sert ainsi de position de référence, à partir de laquelle il est possible de régler précisément la position de la crémaillère par rapport au pignon. Plus précisément, en tournant la bride dans le sens opposé, amenant la crémaillère à s'éloigner du pignon, à partir de cette position de référence, il est possible de régler précisément un jeu minimum nécessaire au fonctionnement du mécanisme, en fonction du domaine d'utilisation thermique concerné par la vanne, sans engendrer des jeux trop importants pouvant limiter la précision de réglage de la vanne, et tout en permettant d'assurer un contact linéique de la liaison engrenage favorable au pression de Hertz par exemple. Ce dispositif permet donc un réglage précis des jeux fonctionnels, permettant d'améliorer la précision de la vanne et sa robustesse.

Dans certains modes de réalisation, la bride de liaison annulaire est fixée à une bride annulaire du corps de vanne, l'axe central de la face externe de la bride de liaison annulaire et un axe central de la bride annulaire du corps de vanne étant concentriques, lorsque la bride de liaison annulaire est fixée à la bride annulaire du corps de vanne.

La bride de liaison annulaire est ainsi centrée par rapport à la bride du corps de vanne. Une rotation de la bride de liaison annulaire sur elle-même, c'est-à-dire autour de son axe principal, correspondant également à l'axe central de la bride du corps de vanne, entraîne un déplacement du deuxième palier par rapport au corps de vanne identique à son déplacement par rapport à la bride de liaison annulaire. Cela permet d'améliorer la précision d'ajustement des jeux entre la crémaillère et le pignon.

Dans certains modes de réalisation, la bride annulaire du corps de vanne comprend, le long de sa circonférence externe, un épaulement de centrage, et la bride de liaison annulaire comprend un épaulement circonférentiel présentant une forme complémentaire à l'épaulement de centrage de la bride annulaire du corps de vanne, et étant configuré pour s'emboiter dans ledit épaulement de centrage lorsque la bride de liaison annulaire est fixée à la bride annulaire du corps de vanne.

En d'autres termes les épaulements respectifs de la bride du corps de vanne et de la bride de liaison annulaire sont configurés pour s'engager l'un dans l'autre, de sorte à limiter les déplacements relatifs entre ces deux brides selon un plan perpendiculaire à l'axe central des brides. En particulier, lorsque les deux brides sont emboîtées l'une dans l'autre, seule une rotation de la bride de liaison annulaire autour de son axe central, par rapport à la bride du corps de vanne, est possible. Il est ainsi possible de faire tourner la bride de liaison annulaire autour de son axe central, tout en conservant le centrage de celle-ci par rapport à la bride du corps de vanne. Cela permet d'améliorer davantage la précision d'ajustement des jeux entre la crémaillère et le pignon.

Dans certains modes de réalisation, lorsque la bride de liaison annulaire est fixée à la bride annulaire du corps de vanne, l'épaulement de centrage et l'épaulement circonférentiel sont axisymétriques autour de l'axe central de la face externe de la bride de liaison annulaire.

Cette configuration permet de faciliter la rotation de la bride de liaison annulaire autour de son axe principal. En effet, au cours de cette rotation, un glissement relatif entre les épaulements respectifs des deux brides se produit. En d'autres termes, les épaulements respectifs servent ainsi de guide en rotation de la bride de liaison annulaire par rapport à la bride annulaire du corps de vanne.

Dans certains modes de réalisation, la bride de liaison annulaire comprend des orifices oblongs répartis circonférentiellement autour de l'axe central de la face externe ladite bride, et configurés pour recevoir des moyens de fixation de la bride de liaison annulaire à la bride annulaire du corps de vanne.

Les orifices oblongs s'étendent selon une direction circonférentielle, autour de l'axe principal de la bride de liaison annulaire. Cette configuration permet de faciliter le processus de réglage des jeux fonctionnels. En effet, la présence de ces orifices oblongs permet une liberté de mouvement de rotation de la bride de liaison annulaire autour de son axe central. En desserrant les moyens de fixation, il est ainsi possible de faire tourner la bride de liaison annulaire autour de son axe central dans un sens anti-horaire (par exemple), jusqu'à ce qu'une extrémité de chaque orifice oblong vienne en butée contre un moyen de fixation, et ensuite de faire tourner la bride de liaison annulaire autour de son axe central dans le sens horaire, jusqu'à ce que l'autre extrémité de chaque orifice oblong vienne en butée contre le moyen de fixation. La présence de ces orifices oblongs offre ainsi une amplitude de rotation possible pour la bride de liaison annulaire, et permet d'ajuster au mieux les jeux fonctionnels souhaités entre la crémaillère et le pignon. Lorsque la position souhaitée est atteinte, les moyens de fixation peuvent être à nouveau serrés pour immobiliser la bride de liaison annulaire contre le corps de vanne.

Dans certains modes de réalisation, selon une direction radiale perpendiculaire à l'axe central de la face externe de la bride de liaison annulaire, une distance entre l'axe central de ladite face externe et le deuxième axe est inférieure à 6 mm, de préférence inférieure à 4 mm, de préférence encore inférieure à 2 mm.

De préférence, l'axe central et le deuxième axe sont décalés initialement l'un par rapport à l'autre, avant le réglage en hauteur de la deuxième extrémité de l'élément de laminage, parallèlement au premier axe. Ces valeurs de décalage entre l'axe central, c'est-à-dire l'axe principal de la bride de liaison annulaire et le deuxième axe, c'est-à-dire l'axe du logement annulaire, permettent d'ajuster la sensibilité de réglage du jeu fonctionnel souhaité entre la crémaillère et le pignon, directement fonction de l'angle de rotation (en considérant par approximation le déplacement en hauteur comme le côté opposé de la tangente de cet angle et le décalage radial comme le coté adjacent). La sensibilité de réglage est d'autant plus précise que le diamètre externe de bride annulaire est important, auquel vient s'ajouter la distance entre les premier et deuxième paliers plus ou moins éloignés l'un de l'autre, et la position de la liaison engrenage plus ou moins centrée entre ces paliers, qui amènent une finesse de réglage supplémentaire proportionnelle au déplacement du deuxième palier. Par ailleurs, un décalage trop faible ne permettrait pas à la crémaillère de venir au contact du pignon de l'arbre de transmission, et un décalage trop important nuirait à la sensibilité de réglage et donc au fonctionnement global de la vanne.

Dans certains modes de réalisation, la vanne est une vanne de régulation cryogénique.

Le présent exposé concerne également un moteur d'engin aéronautique ou astronautique comprenant une vanne de régulation selon l'un quelconque des modes de réalisation précédents.

Dans certains modes de réalisation, le moteur d'engin aéronautique ou astronautique est un moteur de fusée.

Le présent exposé concerne également un procédé de réglage utilisant la vanne de régulation selon l'un quelconque des modes de réalisation précédents, comprenant des étapes de :
- rotation de la bride de liaison dans le sens anti-horaire autour de son axe central jusqu'à amener la crémaillère au contact du pignon,
- rotation de la bride de liaison dans le sens horaire autour de son axe central d'une valeur angulaire prédéterminée,
- serrage de la bride de liaison annulaire contre la bride du corps de vanne par l'intermédiaire des moyens de fixation.

De préférence, avant la rotation de la bride de liaison dans le sens anti-horaire, l'axe central et le deuxième axe sont décalés initialement l'un par rapport à l'autre parallèlement au premier axe. Plus généralement, les différentes rotations de la bride de liaison dans le sens horaire ou anti-horaire, permettant le réglage en hauteur de la deuxième extrémité de l'élément de laminage, se font autour d'une position dans laquelle l'axe central et le deuxième axe sont décalés l'un par rapport à l'autre sensiblement parallèlement au premier axe.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue d'ensemble en perspective d'une vanne de régulation cryogénique selon le présent exposé,
[Fig. 2] La figure 2 est une vue détaillée et en coupe de la vanne de la figure 1, selon le plan de coupe A,
[Fig. 3A-3B] Les figures 3A et 3B sont des vues détaillées respectivement de face et de dessus représentant les jeux fonctionnels de la liaison entre la crémaillère et le pignon,
[Fig. 4] La figure 4 est une vue détaillée et en coupe de la vanne de la figure 1, selon un plan de coupe perpendiculaire au plan A et comprenant la bride de liaison annulaire,
[Fig. 5] La figure 5 représente schématiquement une section de la bride de liaison annulaire perpendiculaire à l'axe principal de cette bride.

### Description des modes de réalisation

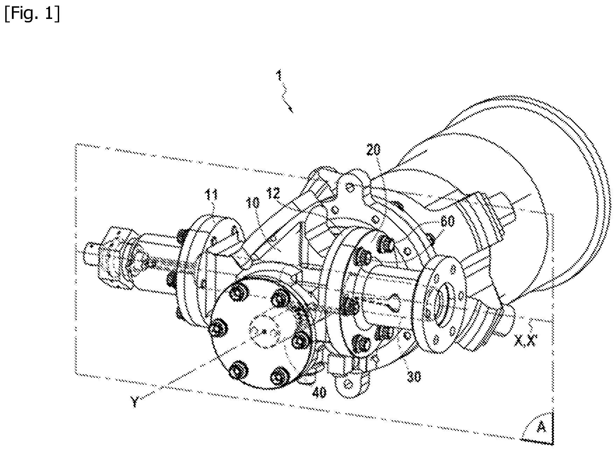

Un mode de réalisation d'une vanne de régulation 1 selon le présent exposé va être décrit en référence aux figures 1 à 5.

La vanne de régulation cryogénique 1 comprend un corps de vanne 10, à l'intérieur duquel sont disposés un arbre de transmission 40 s'étendant le long d'un premier axe Y, et un élément de laminage 30 s'étendant le long d'un deuxième axe X', sensiblement perpendiculaire à l'axe Y. Par sensiblement perpendiculaire, on comprend que les deux axes sont perpendiculaires, moyennant les jeux fonctionnels existant entre ces deux pièces, ainsi que les mouvements résiduels entre ces deux pièces lors du déplacement relatif de l'une par rapport à l'autre.

L'arbre de transmission 40 comprend un pignon 42, et est configuré pour tourner autour du premier axe Y, en étant entraîné par un moteur (non représenté). L'élément de laminage 30 comprend, dans sa partie inférieure, une crémaillère 32, les dents de cette dernière étant engagées avec les dents du pignon 42 de l'arbre de transmission 40. Ainsi, une rotation de l'arbre de transmission 40 autour de son axe Y entraîne une translation de l'élément de laminage 30 le long du deuxième axe X'.

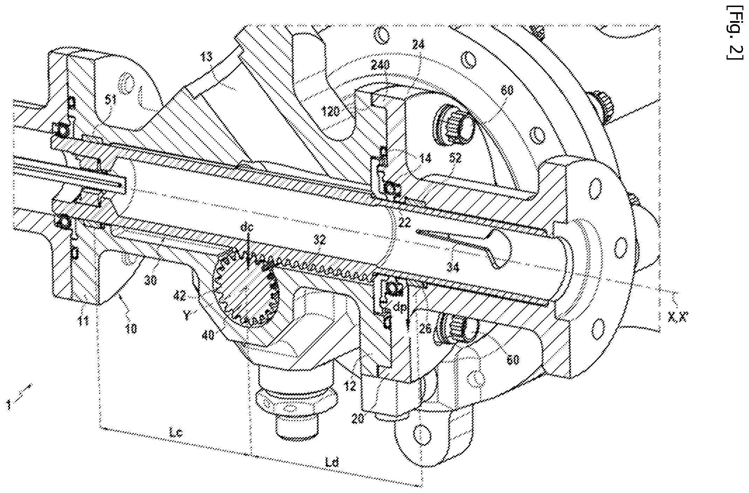

La vanne de régulation cryogénique 1 comprend également une bride de liaison annulaire 20 fixée au corps de vanne 10. La bride de liaison annulaire 20 permet de faire la liaison entre le corps de vanne 10 et un autre élément de l'engin aéronautique (non illustré). Dans la position illustrée sur la figure 2, une extrémité de l'élément de laminage 30, comprenant une fenêtre 34, est disposée dans la bride de liaison 20. Ainsi, un fluide s'écoulant dans un canal 13 du corps de vanne 10 ne peut pas s'écouler à l'intérieur de l'élément de laminage 30, et ne peut donc pas atteindre l'autre élément de l'engin aéronautique. Des joints d'étanchéité 14 sont également prévus au niveau de la liaison entre la bride de liaison annulaire 20 et le corps de vanne 10, pour limiter une fuite du fluide.

A partir de la position illustrée sur la figure 2, lorsque l'arbre de transmission 40 tourne dans le sens anti-horaire, l'élément de laminage 30 est entraîné en translation dans un sens droite-gauche (selon l'orientation de la figure 2), jusqu'à ce que la fenêtre 34 soit en communication fluidique avec le canal 13. Le fluide présent dans ce dernier peut alors s'écouler à l'intérieur de l'élément de laminage 30, et s'écouler jusqu'à l'élément de l'engin aéronautique auquel est fixée la bride de liaison 20.

En outre, l'élément de laminage 30 est guidé en translation, le long du deuxième axe X', par un premier palier 51, disposé dans un première bride 11 du corps de vanne 10, et par un deuxième palier 52, disposé dans la bride de liaison annulaire 20. Les paliers 51 et 52 peuvent être des manchons annulaires comprenant un matériau présentant un faible coefficient de frottement (par exemple du polytétrafluoroéthylène, dit « PTFE »).

Ces différents paliers peuvent être responsables d'une certaine dispersion sur le positionnement et la perpendicularité des axes entre l'arbre et l'élément de laminage, ayant un impact sur la liaison pignon/crémaillère associée. En particulier, la variation des jeux au niveau de cette liaison est directement impactée par ces différentes positions de fonctions pivots/glissières. Les figures 3A et 3B représentent ces différents jeux J1 et J2. La figure 3A est une vue de face, c'est-à-dire une vue parallèle au premier axe Y de rotation du pignon 42, de la liaison entre ce pignon 42 et la crémaillère 32. La figure 3B est une vue du dessus de la figure 3A, c'est-à-dire une vue perpendiculaire à l'axe Y. J1 représente un jeu vertical, c'est-à-dire un espacement existant entre les dents du pignon 42 et celles de la crémaillère 32 selon une direction perpendiculaire à l'axe Y et à l'axe X'. J2 représente un jeu latéral, c'est-à-dire un espacement existant entre les dents du pignon 42 et celles de la crémaillère 32 selon l'axe X'. Un angle β supérieur ou inférieur à 90° entre l'axe Y de l'arbre 40 et l'axe X' de l'élément de laminage peut également être généré (cf. figure 3B) par la position de ses différentes fonctions pivots et glissières.

Le dispositif décrit ci-dessous permet de maîtriser ces jeux, tout en assurant un contact linéique préférable au niveau des dents de la liaison engrenage.

La bride de liaison annulaire 20 s'étend radialement entre une face radialement interne, ci-après « face interne 22 » et une face radialement externe, ci-après « face externe 24 ». Elle est fixée à une deuxième bride 12 du corps de vanne 10, par l'intermédiaire de moyens de fixation, en particulier des liaisons boulonnées 60. La deuxième bride 12 du corps de vanne 10 comprend, le long de sa circonférence radialement externe, un épaulement 120. La bride de liaison annulaire 20 comprend également, le long de sa circonférence radialement externe, un épaulement 240, présentant une forme complémentaire à celle de l'épaulement 120, permettant à la bride de liaison annulaire 20 de s'emboîter, autrement dit, de s'emmancher, dans la deuxième bride 12 du corps de vanne 10.

Les orifices de la bride de liaison 20, à travers lesquels passent les liaisons boulonnées 60 permettant de fixer la bride de liaison 20 à la deuxième bride 12 du corps de vanne 10, sont des orifices oblongs 28. L'axe principal de ces orifices oblongs 28 s'étend dans la direction circonférentielle, autour de l'axe central X de la face externe 24.

La face externe 24 et la deuxième bride 12 sont concentriques, et s'étendent autour d'un axe central X, correspondant à l'axe principal de la bride de liaison annulaire 20. La face interne 22 de la bride de liaison 20 comprend un logement annulaire dans lequel est logé le deuxième palier 52. Le logement annulaire est une gorge annulaire 26 s'étendant le long de la circonférence radialement interne de la face interne 22, autour d'un axe correspondant au deuxième axe X4, le long duquel translate l'élément de laminage 30.

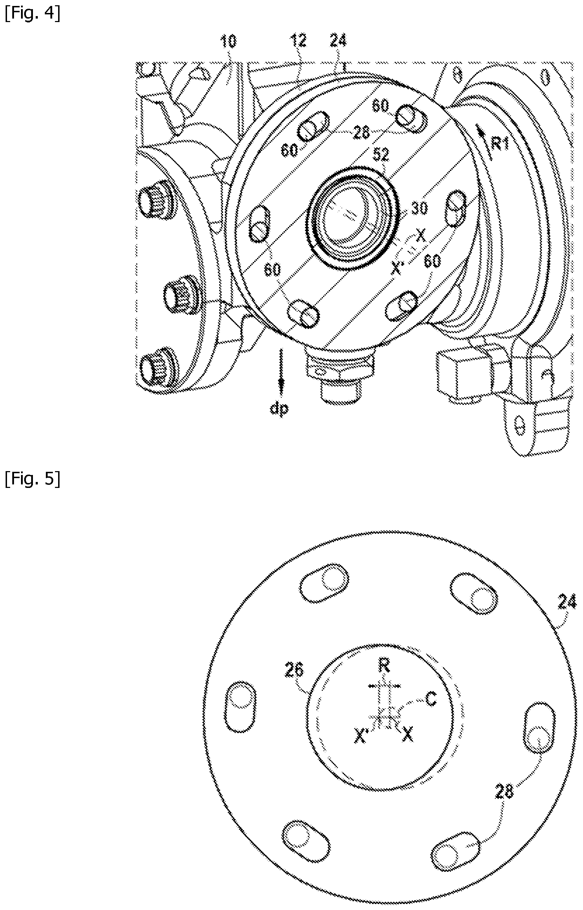

Les axes X et X' ne sont pas coaxiaux, mais sont décalés radialement l'un par rapport à l'autre parallèlement au premier axe Y initialement. Les faces interne et externe de la bride de liaison 20 sont donc excentrées l'une par rapport à l'autre. Le grand cercle en traits interrompus sur la figure 5 représente la position théorique de la face interne 22 si ces axes n'étaient pas décalés. En d'autres termes, l'extrémité de l'élément de laminage 30 disposée dans la bride de liaison 20 et logée à l'intérieur de la face interne 22 en étant guidée par le deuxième palier 52, est excentrée par rapport à la face externe 24. L'axe central X de la face externe 24 de la bride 20 et le deuxième axe X', peuvent être décalés radialement d'une distance R inférieure à 6 mm, de préférence inférieure à 4 mm, de préférence encore inférieure à 2 mm.

Ainsi, une rotation de la bride de liaison 20 autour de l'axe central X entraine un déplacement du deuxième axe X', donc de la gorge 26, et ainsi du deuxième palier 52, autour de l'axe central X, selon une trajectoire circulaire C, de rayon R. Par conséquent, la rotation de la bride de liaison 20 autour de l'axe central X entraine un déplacement dp du deuxième palier 52 vers le bas (selon le référentiel des figures 2 et 4), et donc un déplacement de de l'élément de laminage 30 au niveau de la liaison pignon/crémaillère de quelques dixième voir centième de millimètres, illustré par la flèche sur la figure 2.

Le déplacement dp du palier entraine un déplacement de de la crémaillère selon la formule de = dp x Lc/(Lc + Ld), où Lc est la distance entre le premier palier 51 et le centre du pignon 42, et Ld est la distance entre le deuxième palier 52 et le centre du pignon 42, le long du deuxième axe X'.

Un procédé de réglage des jeux fonctionnels J1, J2, va être décrit dans la suite de la description, en référence aux figures 4 et 6.

A partir d'une position initiale de la bride de liaison 20 autour de l'axe central X, par exemple la position illustrée sur la figure 4, une rotation de la bride de liaison 20 dans le sens R1 illustré sur la figure 4, correspondant au sens anti-horaire, est effectuée autour de l'axe central X (étape S1). Cette rotation est rendue possible par la forme oblongue des orifices 28, pouvant ainsi se déplacer relativement aux liaisons boulonnées 60, dans la direction circonférentielle.

La rotation est stoppée lorsque les dents de la crémaillère 32 viennent en butée au fond des interstices entre les dents du pignon 42, de sorte qu'une rotation dans le sens R1 n'est plus possible (étape S2).

A partir de cette position, une rotation de la bride de liaison 20 dans le sens inverse au sens R1, correspondant au sens horaire, est effectuée autour de l'axe central X (étape S3). Cette rotation est d'une valeur angulaire déterminée au préalable et dépendant de la précision souhaitée, de l'application et des dimensions du dispositif, de manière à laisser un jeu minimum souhaité et nécessaire au fonctionnement du mécanisme dans le domaine d'utilisation thermique concerné par la vanne.

Une fois le positionnement souhaité obtenu, la rotation est stoppée, et les liaisons boulonnées 60 sont serrées de manière fixer la bride de liaison 20, et donc la crémaillère 30, dans cette position (étape S4).

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Vanne de régulation (1) à système de transmission pignon/crémaillère pour engin aéronautique ou astronautique, comprenant :
- un corps de vanne (10),
- un arbre de transmission (40) disposé au moins en partie dans le corps de vanne (10), mobile en rotation autour d'un premier axe (Y), et comportant un pignon (42),
- un élément de laminage (30) disposé au moins en partie dans le corps de vanne (10), mobile en translation le long d'un deuxième axe (X') sensiblement perpendiculaire au premier axe (Y), et comportant une crémaillère (32), la crémaillère (32) étant engagée avec le pignon (42) de sorte qu'une rotation de l'arbre de transmission (40) entraine une translation de l'élément de laminage (30), une première extrémité de l'élément de laminage étant guidée en translation par un premier palier fixe (51), et une deuxième extrémité de l'élément de laminage étant guidée en translation par un deuxième palier (52),
- une bride de liaison annulaire (20) fixée au corps de vanne (10) par l'intermédiaire de moyens de fixation (60), la bride de liaison annulaire (20) s'étendant radialement entre une face interne (22) axisymétrique autour du deuxième axe (X') et une face externe (24) axisymétrique autour d'un axe central (X), **caractérisé en ce que** la face interne (22) comprend un logement radialement interne (26) dans lequel est logé le deuxième palier (52), le deuxième axe (X') étant décalé radialement par rapport à l'axe central (X).

2. Vanne de régulation (1) selon la revendication 1, dans laquelle la bride de liaison annulaire (20) est fixée à une bride annulaire (12) du corps de vanne (10), l'axe central (X) de la face externe (24) de la bride de liaison annulaire (20) et un axe central de la bride annulaire (12) du corps de vanne étant concentriques, lorsque la bride de liaison annulaire (20) est fixée à la bride annulaire (12) du corps de vanne.

3. Vanne de régulation (1) selon la revendication 2, dans laquelle la bride annulaire (12) du corps de vanne (10) comprend, le long de sa circonférence externe, un épaulement de centrage (120), et la bride de liaison annulaire (20) comprend un épaulement circonférentiel (240) présentant une forme complémentaire à l'épaulement de centrage (120) de la bride annulaire (12) du corps de vanne (10), et étant configuré pour s'emboiter dans ledit épaulement de centrage (120) lorsque la bride de liaison annulaire (20) est fixée à la bride annulaire (12) du corps de vanne (10).

4. Vanne de régulation (1) selon la revendication 3, dans laquelle lorsque la bride de liaison annulaire (20) est fixée à la bride annulaire (12) du corps de vanne (10), l'épaulement de centrage (120) et l'épaulement circonférentiel (240) sont axisymétriques autour de l'axe central (X) de la face externe (24) de la bride de liaison annulaire (20).

5. Vanne de régulation (1) selon l'une quelconque des revendications 2 à 4, dans laquelle la bride de liaison annulaire (20) comprend des orifices oblongs (28) répartis circonférentiellement autour de l'axe central (X) de la face externe (24) ladite bride, et configurés pour recevoir des moyens de fixation (60) de la bride de liaison annulaire (20) à la bride annulaire (12) du corps de vanne (10).

6. Vanne de régulation (1) selon l'une quelconque des revendications 1 à 5, dans laquelle, selon une direction radiale perpendiculaire à l'axe central (X) de la face externe (24) de la bride de liaison annulaire (20), une distance entre l'axe central (X) de ladite face externe (24) et le deuxième axe (X') est inférieure à 6 mm, de préférence inférieure à 4 mm, de préférence encore inférieure à 2 mm.

7. Vanne de régulation (1) selon l'une quelconque des revendications 1 à 6, la vanne (1) étant une vanne de régulation cryogénique.

8. Moteur d'engin aéronautique ou astronautique comprenant une vanne de régulation (1) selon l'une quelconque des revendications précédentes.

9. Moteur d'engin aéronautique ou astronautique selon la revendication 8, le moteur étant un moteur de fusée.

10. Procédé de réglage utilisant la vanne de régulation (1) selon l'une quelconque des revendications 1 à 7, comprenant des étapes de :
- rotation de la bride de liaison annulaire (20) dans le sens anti-horaire autour de son axe central (X) jusqu'à amener la crémaillère (32) au contact du pignon (42),
- rotation de la bride de liaison annulaire (20) dans le sens horaire autour de son axe central (X) d'une valeur angulaire prédéterminée,
- serrage de la bride de liaison annulaire (20) contre la bride annulaire (12) du corps de vanne (10) par l'intermédiaire des moyens de fixation (60).

## Patentansprüche

1. Regelventil (1) mit Zahnrad/Zahnstangen-Übertragungssystem für Luft- oder Raumfahrzeug, umfassend:
- einen Ventilkörper (10),
- eine Übertragungswelle (40), die zumindest teilweise im Ventilkörper (10) angeordnet ist, um eine erste Achse (Y) drehbeweglich ist und ein Zahnrad (42) aufweist,
- ein Walzelement (30), das zumindest teilweise im Ventilkörper (10) angeordnet ist, entlang einer zweiten Achse (X') im Wesentlichen senkrecht zur ersten Achse (Y) translationsbeweglich ist und eine Zahnstange (32) aufweist, wobei die Zahnstange (32) mit dem Zahnrad (42) in Eingriff steht, so dass eine Drehung der Übertragungswelle (40) eine Translation des Walzelements (30) bewirkt, wobei ein erstes Ende des Walzelements durch ein erstes festes Lager (51) translatorisch geführt wird, und ein zweites Ende des Walzelements durch ein zweites Lager (52) translatorisch geführt wird,
- einen ringförmigen Verbindungsflansch (20), der über Befestigungsmittel (60) am Ventilkörper (10) befestigt ist, wobei sich der ringförmige Verbindungsflansch (20) radial zwischen einer um die zweite Achse (X') achsensymmetrischen Innenseite (22) und einer um eine Mittelachse (X) achsensymmetrischen Außenseite (24) erstreckt, **dadurch gekennzeichnet, dass** die Innenseite (22) eine radial innere Aufnahme (26) umfasst, in der das zweite Lager (52) untergebracht ist, wobei die zweite Achse (X') in Bezug auf die Mittelachse (X) radial versetzt ist.

2. Regelventil (1) nach Anspruch 1, wobei der ringförmige Verbindungsflansch (20) an einem ringförmigen Flansch (12) des Ventilkörpers (10) befestigt ist, wobei die Mittelachse (X) der Außenseite (24) des ringförmigen Verbindungsflanschs (20) und eine Mittelachse des ringförmigen Flanschs (12) des Ventilkörpers konzentrisch sind, wenn der ringförmige Verbindungsflansch (20) am ringförmigen Flansch (12) des Ventilkörpers befestigt ist.

3. Regelventil (1) nach Anspruch 2, wobei der ringförmige Flansch (12) des Ventilkörpers (10) entlang seines Außenumfangs eine Zentrierschulter (120) umfasst, und der ringförmige Verbindungsflansch (20) eine Umfangsschulter (240) umfasst, die eine zur Zentrierschulter (120) des ringförmigen Flanschs (12) des Ventilkörpers (10) komplementäre Form aufweist und ausgelegt ist, in die Zentrierschulter (120) einzurasten, wenn der ringförmige Verbindungsflansch (20) am ringförmigen Flansch (12) des Ventilkörpers (10) befestigt ist.

4. Regelventil (1) nach Anspruch 3, wobei, wenn der ringförmige Verbindungsflansch (20) am ringförmigen Flansch (12) des Ventilkörpers (10) befestigt ist, die Zentrierschulter (120) und die Umfangsschulter (240) achsensymmetrisch um die Mittelachse (X) der Außenseite (24) des ringförmigen Verbindungsflanschs (20) sind.

5. Regelventil (1) nach einem der Ansprüche 2 bis 4, wobei der ringförmige Verbindungsflansch (20) Langlöcher (28) aufweist, die umfangmäßig um die Mittelachse (X) der Außenseite (24) des Flanschs verteilt sind und zur Aufnahme der Befestigungsmittel (60) des ringförmigen Verbindungsflanschs (20) am ringförmigen Flansch (12) des Ventilkörpers (10) ausgelegt sind.

6. Regelventil (1) nach einem der Ansprüche 1 bis 5, wobei in einer radialen Richtung senkrecht zur Mittelachse (X) der Außenseite (24) des ringförmigen Verbindungsflanschs (20) ein Abstand zwischen der Mittelachse (X) der Außenseite (24) und der zweiten Achse (X') kleiner als 6 mm, vorzugsweise kleiner als 4 mm, vorzugsweise noch kleiner als 2 mm ist.

7. Regelventil (1) nach einem der Ansprüche 1 bis 6, wobei das Ventil (1) ein kryogenes Regelventil ist.

8. Triebwerk für Luft- oder Raumfahrzeug, umfassend ein Regelventil (1) nach einem der vorhergehenden Ansprüche.

9. Triebwerk für Luft- oder Raumfahrzeug nach Anspruch 8, wobei das Triebwerk ein Raketentriebwerk ist.

10. Regelverfahren unter Verwendung des Regelventils (1) nach einem der Ansprüche 1 bis 7, umfassend die Schritte:
- Drehen des ringförmigen Verbindungsflanschs (20) entgegen dem Uhrzeigersinn um seine Mittelachse (X), bis die Zahnstange (32) in Kontakt mit dem Zahnrad (42) gebracht ist,
- Drehen des ringförmigen Verbindungsflanschs (20) im Uhrzeigersinn um seine Mittelachse (X) in einem vorbestimmten Winkelwert,
- Spannen des ringförmigen Verbindungsflanschs (20) gegen den ringförmigen Flansch (12) des Ventilkörpers (10) mit Hilfe der Befestigungsmittel (60).

## Claims

1. A regulating valve (1) with a rack and pinion transmission system for an aircraft or a spacecraft, comprising:
- a valve body (10),
- a transmission shaft (40) disposed at least partly in the valve body (10), movable in rotation about a first axis (Y), and including a pinion (42),
- a rolling element (30) disposed at least partly in the valve body (10), movable in translation along a second axis (X') substantially perpendicular to the first axis (Y), and including a rack (32), the rack (32) being engaged with the pinion (42) so that a rotation of the transmission shaft (40) causes a translation of the rolling element (30), a first end of the rolling element being guided in translation by a first fixed bearing (51), and a second end of the rolling element being guided in translation by a second bearing (52),
- an annular connecting flange (20) fixed to the valve body (10) by means of fixing means (60), the annular connecting flange (20) radially extending between an inner face (22) which is axisymmetric about the second axis (X') and an outer face (24) which is axisymmetric about a central axis (X), **characterized in that** the inner face (22) comprises a radially inner housing (26) in which the second bearing (52) is housed, the second axis (X') being radially offset with respect to the central axis (X).

2. The regulating valve (1) according to claim 1, wherein the annular connecting flange (20) is fixed to an annular flange (12) of the valve body (10), the central axis (X) of the outer face (24) of the annular connecting flange (20) and a central axis of the annular flange (12) of the valve body being concentric, when the annular connecting flange (20) is fixed to the annular flange (12) of the valve body.

3. The regulating valve (1) according to claim 2, wherein the annular flange (12) of the valve body (10) comprises, along its outer circumference, a centering shoulder (120), and the annular connecting flange (20) comprises a circumferential shoulder (240) having a shape complementary to the centering shoulder (120) of the annular flange (12) of the valve body (10), and being configured to interlock with said centering shoulder (120) when the annular connecting flange (20) is fixed to the annular flange (12) of the valve body (10).

4. The regulating valve (1) according to claim 3, wherein when the annular connecting flange (20) is fixed to the annular flange (12) of the valve body (10), the centering shoulder (120) and the circumferential shoulder (240) are axisymmetric about the central axis (X) of the outer face (24) of the annular connecting flange (20).

5. The regulating valve (1) according to any one of claims 2 to 4, wherein the annular connecting flange (20) comprises oblong orifices (28) circumferentially distributed about the central axis (X) of the outer face (24) of said flange, and configured to receive means (60) for fixing the annular connecting flange (20) to the annular flange (12) of the valve body (10).

6. The regulating valve (1) according to any one of claims 1 to 5, wherein, along a radial direction perpendicular to the central axis (X) of the outer face (24) of the annular connecting flange (20), a distance between the central axis (X) of said outer face (24) and the second axis (X') is less than 6 mm, preferably less than 4 mm, more preferably less than 2 mm.

7. The regulating valve (1) according to any one of claims 1 to 6, the valve (1) being a cryogenic regulating valve.

8. An engine of an aircraft or a spacecraft comprising a regulating valve (1) according to any one of the preceding claims.

9. The engine of an aircraft or a spacecraft according to claim 8, the engine being a rocket engine.

10. An adjusment method using the regulating valve (1) according to any one of claims 1 to 7, comprising steps of:
- rotating the annular connecting flange (20) in the counterclockwise direction about its central axis (X) until bringing the rack (32) into contact with the pinion (42),
- rotating the annular connecting flange (20) in the clockwise direction about its central axis (X) by a predetermined angular value,
- tightening the annular connecting flange (20) against the annular flange (12) of the valve body (10) via the fixing means (60).
